# EUROPEAN PATENT APPLICATION

(11) **EP 2 544 116 A1**
(43) Date of publication of application: **09.01.2013**
(21) Application number: 11305870.5
(22) Date of filing: 06.07.2011
(51) Int. Cl.: G06F 21/00

(54) **Method of managing the loading of data in a secure device**

(71) Applicant: Gemalto SA, 92190 Meudon (FR)
(72) Inventor: Labourie, Florent, 13005 Marseille (FR); Coulier, Charles, 13360 Roquevaire (FR); Gonzalvo, Benoît, 13360 Roquevaire (FR)

(57) **Abstract**

The invention is a method of managing a non volatile memory embedded in a secure device. The secure device receives a series of ciphered data blocks. A first plain data block is computed by deciphering a first ciphered data block. First plain data block is written into the non volatile memory. The method comprises the step of deciphering the next ciphered data block and computing a first integrity value for the first plain data block in parallel, the computation of first integrity value is carried out by using first plain data block which is stored in the non volatile memory

## Description

### (Field of the invention)

The present invention relates to methods of loading data in a secure device. In particular, the present invention relates to methods of loading data to be stored in a non volatile memory embedded in a secure device. The present invention is well suited for securely storing sensitive data in a non volatile memory.

### (Background of the invention)

A secure device is a machine which is able to allow or deny access to data it contains. In general data intended to be securely stored in a secure device is received in a ciphered form. The data is assumed to be previously ciphered by another machine which sends the ciphered data to the secure device. In general the secure device also receives a reference integrity data corresponding to the ciphered data. This reference integrity data allows the secure device to check that the received data have not been modified (or corrupted). With this aim in view, the secure device compute an integrity data from the ciphered (or plain) data which is temporary stored in volatile memory (i.e. in RAM). Then the secure device checks that integrity is correct by using both the computed integrity data and the reference integrity data. When a secure device receives a large amount of data, the time needed for the deciphering treatment and the integrity treatment may be important.

There is a need to optimize timing performance when data is securely loaded in a secure device.

### (Summary of the Invention)

An object of the invention is to solve the above mentioned technical problem.

The object of the present invention is a method for managing a non volatile memory which is embedded in a secure device. The secure device receives a series of ciphered data blocks. A first plain data block is computed by deciphering a first ciphered data block. Said first plain data block is written into the non volatile memory. The method comprises the step of deciphering the next ciphered data block and computing a first integrity value for the first plain data block in parallel. The computation of first integrity value is carried out by using said first plain data block which is stored in the non volatile memory.

Advantageously, integrity of the first plain data block may be controlled by checking said first integrity value versus a reference integrity value received by the secure device.

Advantageously, said computation of first integrity value may be carried out by using a secret data previously stored in the secure device.

Advantageously, the secure device (SD) may comprise a processor and a co-processor and deciphering operations and integrity value computing operations may be performed in parallel by said co-processor and processor.

Advantageously, the secure device (SD) may comprise first and second co-processors and deciphering operations and integrity value computing operations may be performed in parallel by said co-processors.

Advantageously, a second integrity value may be computed from said first integrity value and from a second plain data block. Said second integrity value may be checked by using a reference integrity data received by the secure device.

Another object of the invention is a secure device comprising a non volatile memory. The secure device comprises first and second distinct processing units. The secure device is intended to receive a series of ciphered data blocks. First processing unit is able to generate a first plain data block by deciphering first ciphered data block. First plain data block is intended to be written into the non volatile memory. The secure device comprises a scheduler means adapted to ensure that the computing operation of a first integrity value for said first plain data block and the deciphering operation of the next ciphered data block are performed in parallel. The computation operation of first integrity value is carried out by said second processing unit from said first plain data block which is stored in the non volatile memory.

Advantageously, the secure device may comprise a storing means adapted to store said first integrity value. The secure device may comprise a checking means adapted to control integrity of the first plain data block by checking said first integrity value versus a reference integrity value received by the secure device.

Advantageously, second processing unit may be adapted to compute first integrity value by using a secret data previously stored in the secure device.

Advantageously, first and second processing units may be a processor and a co-processor.

Advantageously, first and second processing units may be two co-processors.

Advantageously, second processing unit may be adapted to compute a second integrity value from said first integrity value and from a second plain data block. The checking means may be adapted to check said second integrity value by using a reference integrity data received by the secure device.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secure device receiving data from another machine; and
- Figure 2 is depicts schematically the concomitant management of deciphering treatments and integrity treatment in a secure device according to the invention.

### (Detailed description of the preferred embodiments)

The invention may apply to any types of secure devices having two processing units. In particular, the secure device may be a smartcard, a mobile equipment, a Machine-To-Machine (M2M) device, a Tablet PC or any computer machine which contains secure data. For instance, such computer machine may be embedded in a car or a plane. The secure device may be a component which is fixed to an associated machine or a removable component which may connect several machines. For instance, an embedded SIM (i.e. welded to a mobile phone) is a secure device. For instance, a Universal Integrated Circuit Card (UICC) is a secure device.

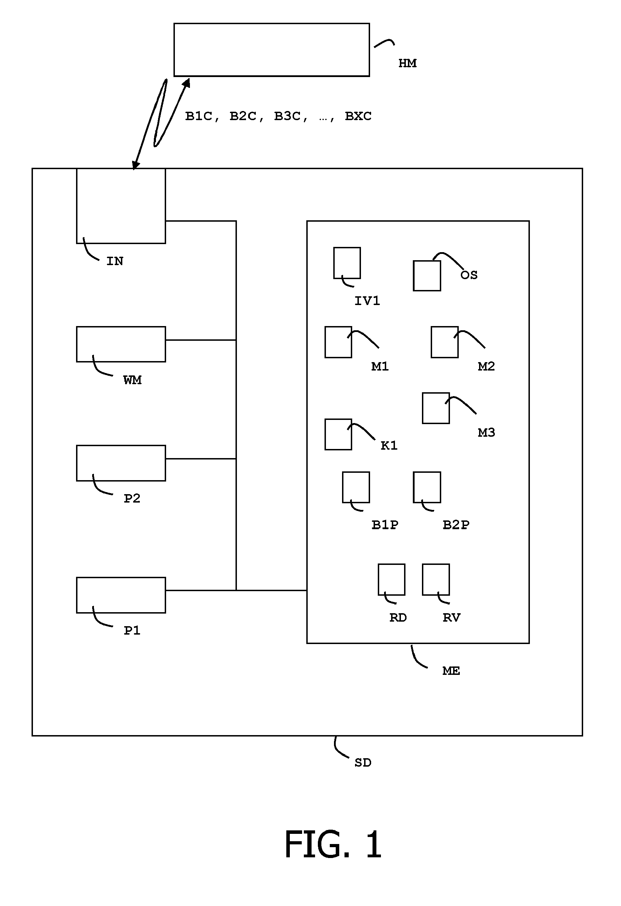

**Figure 1** shows the architecture of a secure device SD of SIM card type according to a preferred embodiment of the invention.

The secure device SD comprises a working memory WM of RAM type, a non volatile memory ME, a two processing units P1 and P2 and a communication interface IN. The non volatile memory ME comprises an operating system OS, a secret data K1 and three means M1, M2 and M3.

The memory ME may be implemented as any combinations of one or several memory components. The memory ME may be NAND flash or EEPROM memory or another type of non volatile memory.

In a preferred embodiment, the processing unit P1 is a microprocessor and the processing unit P2 is a crypto co-processor.

The SIM card SD is able to exchange messages with a telecom handset HM through the communication interface IN. The telecom handset HM is able to exchange messages with a distant server (not shown) via the Over-The-Air (OTA) mechanism or via a public network for example. The telecom handset HM may load an application into the SIM SD. This application may be sent thanks to a series of ordered data blocks BIG, B2C, B3C, ..., BXC. which are ciphered. The secure device must decipher each block, compute an integrity value for each block and check the integrity for all the blocks. The plain data block B1P is shown as stored in the memory ME. This plain data block B1P is assumed to be generated as a result of the ciphered data block B1G deciphering operation. Similarly, plain data block B2P is assumed to be generated as a result of the ciphered data block B2C deciphering operation.

The secret data K1 is a key which is used by the secure device SD for integrity treatment.

In one example, the operating system OS may comprise a Javacard ® virtual machine and the loaded applications may be an applet.

The means M1 (also called scheduler means) is able to ensure that the computing of the integrity data for a data block and the deciphering treatment of the next data block are performed in parallel. In other words, the means M1 is capable of delegating the deciphering computation and the integrity data computation to the microprocessor P1 and the crypto co-processor P2 so that both the two processing units P1 and P2 run simultaneously.

The means M2 (also called storing means) is able to record the computed integrity data. For instance, the computed integrity data may be stored into either the working memory WM, in a register, into the memory ME or into any relevant area. The means M2 stores the integrity data so that a link between this integrity data and its corresponding plain data block remains available. In other word, the storing operation is carried out so that the secure device is able to retrieve the integrity data associated to a given plain data block. At Figure 1, the integrity data IV1 is shown as stored in the memory ME. This integrity data IV1 is assumed to be generated from the plain data block B1P. This integrity data IV1 is intended to enable verification of the integrity of the plain data block B1P. Alternatively, the integrity data IV1 may be temporary stored in a volatile area.

The means M3 (also called checking means) is able to control that a plain data block has not been corrupted. The means M3 is capable of checking the integrity data associated to this plain data block versus a reference integrity value RV. This reference integrity value RV is assumed to be previously received by the secure device.

Alternatively, the means M3 is capable of checking several integrity data corresponding to a plurality of consecutive blocks through a single checking operation by using a reference integrity data RD.

The three means M1, M2 and M3 may be implemented as three software components which are run by the main processor P1 of the secure device SD. Alternatively, these three means may be implemented as a single software component.

Advantageously, the secure device SD comprises a means able to stop the process of loading data in the memory as soon as an integrity error is detected.

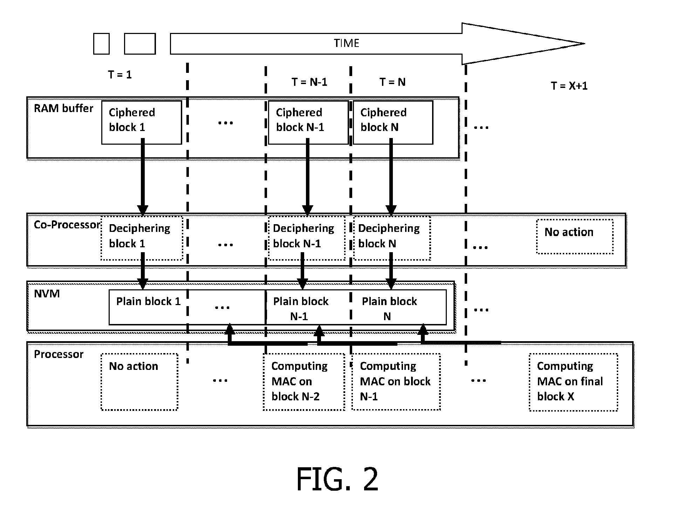

**Figure 2** shows an example of the parallel management of deciphering treatments and integrity treatments in the secure device SD of Figure 1.

The received data blocks are deciphered on the fly in the secure device. In this specification, "block" means "data block".

A set of consecutive ciphered data blocks is received by the secure device SD. The block #1 is the first received data block. The block #1 is stored in the working memory WM. For instance the block #1 is stored in a RAM buffer. In this example, the deciphering operation is carried out by the co-processor. The co-processor is assumed to have access to the secret data and algorithm needed for deciphering the block. The result of the deciphering operation is a plain block #1. This plain block #1 is then stored in the non volatile memory ME.

Then the next ciphered block is received and stored into the RAM buffer. This next ciphered block is the block #2.

According to an embodiment of the invention the deciphering operation of the block #2 is performed at the same time the integrity data is computed for the block #1. In the example of Figure 2, the integrity data is a MAC (Message Authentication Code) computed thanks to the key K1. These two treatments are performed in parallel by the processor and the co-processor of the secure device SD.

In a further stage, the secure device controls the integrity of the plain block #1 by checking the MAC computed from plain block #1. For instance, this MAC may be compared with a reference integrity value RV which has been received with the block #1.

Then the block management goes on by treating in parallel deciphering of block #N and computing the integrity data of block #N-1.

When the last ciphered block (i.e. block #X) has been deciphered, the processor computes the integrity data of the plain block #X while there is no remaining deciphering treatment for the co-processor.

Advantageously, the integrity data of block #N may be computed from both the value of the plain block #N and from the integrity data computed for the plain block #N-1. This case corresponds to a chaining scheme where the integrity data of block #N is chained the integrity data of block #N-1. In other words, integrity data of block #N-1 is an input value for computing the integrity data of block #N. Since the integrity data of block #N depends on the integrity data of block #N-1, the checking of the integrity data of block #N allows to control that both integrity data of block #N and integrity data of block #N-1 are correct (or not). In this case a single checking operation is carried out instead of one checking operation for each block.

In one example, the two processing units P1 and P2 may share a common set of registers reachable through a common bus. These registers may be loaded for requesting the deciphering operation of a ciphered data block by the co-processor P2. The loading of these registers may be done through 2 up t 4 clock cycles.

Then the co-processor P2 starts the deciphering operation as such. The deciphering operation may take about 832 clock cycles for examples.

During the co-processor P2 running, the processor P1 is requested for computing the integrity of the previous data block. The loading of relevant registers may be done through 2 up t 4 clock cycles.

Then the processor P1 starts the computation of integrity data while the co-processor P2 runs the deciphering operation. The time required for the computation of integrity data is of the same order than the time required for the deciphering operation. The time required for loading the registers is insignificant beside the time of operations executed by the processing units P1 and P2. That is why the two processing units are considered to run in parallel.

In one example, control of integrity for each block may be performed individually. In other word, the integrity of a plain data block may be checked as soon as the associated integrity data has been computed.

Alternatively, several integrity data which correspond to a plurality of blocks may be controlled through a single checking operation by using a reference integrity data RD. For example, the SIM SD may receive a series of APDU commands (as defined by IS07816 standard), each of these commands comprising a ciphered data block. Then the SIM SD may receive an additional APDU command comprising the reference integrity data RD.

Alternatively, the deciphering operation may be executed by the processor P1 and integrity data computation may be carried out by the co-processor P2.

Alternatively, the deciphering operation and integrity data computation may be carried out by two co-processors embedded in the secure device. For instance, the deciphering operation may be performed by a Triple-DES (Data Encryption Standard) co-processor and the computation of integrity data may be performed by an AES (Advanced Encryption Standard) co-processor or vice-versa. These operations may also being delegated to a PK (Public Key) crypto co-processor or any other type of co-processor.

The integrity data computed for each plain data block may be a MAC as described above or any other digest which allows checking that a plain data block is not corrupted.

Alternatively, the integrity data may be computed with a hash function or a Cyclic redundancy check (CRC) function without using any secret data. Such an embodiment may be useful when focusing on the robustness.

Alternatively, the integrity data may be computed with as the result of a hash function and this result may be signed afterwards. Such an embodiment may be useful when focusing on the security.

In one example, the data integrity may be computed from the plain data block without using a specific secret data. For instance, the data integrity may be computed with a hash algorithm. Preferably, a secret data K1 is applied to the computed hash in order to generate a signed data integrity which is used for the integrity checking.

Thanks to the invention, the time needed for securely storing data in the non volatile memory is reduced since several operations are carried out in parallel. This is particularly interesting when a large amount of data is loaded in a secure device.

According to the invention, the integrity data is computed from the plain data block which is red in the non volatile memory (i.e. previously written in NVM after the deciphering operation). An advantage of the invention is to guarantee that the integrity of the data physically written in the non volatile memory is correct. Even if a plain data block is corrupted after the deciphering stage, an integrity error is detected during the checking of the computed integrity data.

Thanks to the invention the process of secure data loading may be easily resumed when a power cut occurs during the treatment. Since the computed integrity data are stored in the non volatile memory ME, the checking of this data may be done without re-computing the corresponding integrity data.

An advantage of the invention is that the integrity of the received data blocks may be computed on the fly. Thus an integrity error may be detected quickly without waiting for the receipt of the last data block of the series.

Although the above embodiments and examples have been described for a smart card, the invention also applies to any kind of secure devices which comprise at least two processing units.

Although the above embodiments and examples have been described for the loading of an application, the invention also applies to any kind of data which must be securely loaded in secure devices.

## Claims

1. A method for managing a non volatile memory (ME) embedded in a secure device (SD), said secure device (SD) receiving a series of ciphered data blocks (B1C, B2C), a first plain data block (B1P) being computed by deciphering a first ciphered data block (B1C), said first plain data block (B1P) being written into the non volatile memory (ME),
**characterized in that** the method comprises the step of deciphering the next ciphered data block (B2C) and computing a first integrity value (IV1) for the first plain data block (B1P) in parallel, the computation of first integrity value (IV1) being carried out by using said first plain data block (B1P) which is stored in the non volatile memory (ME).

2. A method according to claim 1, wherein integrity of the first plain data block (B1P) is controlled by checking said first integrity value (IV1) versus a reference integrity value (RV) received by the secure device (SD).

3. A method according to claim 1 or 2, wherein said computation of first integrity value (IV1) is carried out by using a secret data (K1) previously stored in the secure device (SD).

4. A method according to one of claims 1 to 3, wherein the secure device (SD) comprises a processor and a co-processor and wherein deciphering operations and integrity value computing operations are performed in parallel by said co-processor and processor.

5. A method according to one of claims 1 to 3, wherein the secure device (SD) comprises first and second co-processors and wherein deciphering operations and integrity value computing operations are performed in parallel by said co-processors.

6. A method according to one of claim 1 to 5, wherein a second integrity value is computed from said first integrity value (IV1) and from a second plain data block (B2P) and wherein said second integrity value is checked by using a reference integrity data (RD) received by the secure device (SD).

7. A secure device (SD) comprising a non volatile memory (ME), said secure device (SD) comprising first and second distinct processing units (P1, P2), said secure device (SD) being intended to receive a series of ciphered data blocks (B1C, B2C), first processing unit (P1) being able to generate a first plain data block (B1P) by deciphering first ciphered data block (B1C), said first plain data block (B1P) being intended to be written into the non volatile memory (ME),
**characterized in that** said secure device (SD) comprises a scheduler means (M1) adapted to ensure that the computing operation of a first integrity value (IV1) for said first plain data block (B1P) and deciphering operation of the next ciphered data block (B2C) are performed in parallel, the computation operation of first integrity value (IV1) being carried out by said second processing unit (P2) from said first plain data block (B1P) which is stored in the non volatile memory (ME).

8. A secure device (SD) according to claim 7, wherein said secure device (SD) comprises a storing means (M2) adapted to store said first integrity value (IV1) and wherein said secure device (SD) comprises a checking means (M3) adapted to control integrity of the first plain data block (B1P) by checking said first integrity value (IV1) versus a reference integrity value (RV) received by the secure device (SD).

9. A secure device (SD) according to claim 7 or 8, wherein said second processing unit (P2) is adapted to compute first integrity value (IV1) by using a secret data (K1) previously stored in the secure device (SD).

10. A secure device (SD) according to one of claims 7 to 9, wherein first and second processing units (P1, P2) are a processor and a co-processor.

11. A secure device (SD) according to one of claims 7 to 9, wherein first and second processing units (P1, P2) are two co-processors.

12. A secure device (SD) according to one of claim 7 to 10, wherein said second processing unit (P2) is adapted to compute a second integrity value from said first integrity value (IV1) and from a second plain data block (B2P) and wherein said checking means (M3) is adapted to check said second integrity value by using a reference integrity data (RD) received by the secure device (SD).
